# EUROPEAN PATENT SPECIFICATION

(11) **EP 0 953 074 B1**
(45) Date of publication and mention of the grant of the patent: **31.10.2001**
(21) Application number: 97950996.5
(22) Date of filing: 29.12.1997
(51) Int. Cl.: D04H 1/54, D04H 13/00, D04H 5/06

(54) **PROCESS FOR MANUFACTURING A BAND-SHAPED NON-WOVEN PRODUCT WITH INCREASED TENSILE STRENGTH**
VERFAHREN ZUR HERSTELLUNG EINES BANDFÖRMIGEN VLIESSTOFFES MIT ERHÖTER ZUGFESTIGKEIT
PROCEDE DE FABRICATION D'UN PRODUIT NON TISSE EN BANDE AVEC UNE RESISTANCE A LA TRACTION ACCRUE

(30) Priority: 30.12.1996 BE 9601084
(43) Date of publication of application: 03.11.1999
(73) Proprietor: Wattex, 9255 Buggenhout (BE)
(72) Inventor: BAERT, Louis, MC-Fontvieille (MC); BAERT, Paul, B-1840 Londerzeel (BE)
(74) Representative: Pieraerts, Jacques
(86) International application number: BE9700140
(87) International publication number: WO9829591

(56) References cited:
- EP-A- 0 506 051
- EP-A- 0 564 784
- GB-A- 2 169 930
- US-A- 5 063 099
- US-A- 5 219 633

## Description

This invention relates to a process for manufacturing a band-shaped non-woven product with increased tensile strength, longitudinally and/or in the cross direction of the band-shaped product, as well as to the band-shaped non-woven products manufactured according to this process.

It is the aim of the invention to realize a band-shaped non-woven product of the above discussed type, the tensile strength (according to DIN 53857) of which is increased longitudinally, in the cross direction, or in both directions.

Non-woven products of the kind referred to, and having such characteristics, find a remarkable application as a geotextile or as a carrier for bituminous roofing bands.

In European patent application EP-A-0.506.051 it is proposed to reinforce a non-woven structure having a specific weight with polyester filaments showing an elasticity comparable with that of the non-woven structure. The strengthening filaments are applied between two layers of non-woven material and fixed by making use of a binder and thermo-mechanical means.

The strengthening of non-woven products has already been proposed in the following documents: GB 2 169 930 A and US 5,219,633. In the former reference, essentially the elasticity of the product is considered, and not the application of the process on band-shaped products essentially intended as a carrier for bituminous roofing bands is suggested. The increase of the tensile strength of such band-shaped non-woven products presents very specific requirements, especially when the tensile strength is considered exclusively longitudinally and/or in the cross direction of the product.

In the latter reference, the production of a non-woven material as a raw material for diapers, among others, is described, so it will be immediately clear that the process described in this reference complies with very specific requirements, and does not in any way provide any indication to the issue discussed here, i.e. the realisation of carriers for asphalt bands and geotextiles by strengthening of the tensile strength of the band-shaped product, specifically longitudinally and/or in the cross direction.

In order to achieve the proposed aim, the process according to the invention is primarily characterized in that, in the direction in which the tensile strength of the non-woven is to be increased, strengthening wires and/or filaments are applied to it, and are joined to the fleece of which the non-woven consists, by application of the needling technique.

Still according to the invention, above mentioned fleece with the strengthening wires and/or filaments applied to it, are thermofixed.

In a first embodiment, for manufacturing the fleece of the non-woven, natural, synthetic or mineral staple fibres are used, or a combination thereof.

According to another possible embodiment, for manufacturing the fleece of the non-woven, continuous synthetic filaments are used.

Other details and advantages of the invention will appear from the following description of a process for manufacturing a non-woven product with increased tensile strength and of the thus obtained non-woven according to the invention.

This description is exclusively given as an example and does not limit the invention.

The current non-wovens are built up, either of staple fibres, or of continuous filaments. In these non-wovens, the ratio of the strength longitudinally and in the cross direction is dertermined by the ratio of the number of fibres or filaments which are found longitudinally or in the cross direction, and by their respective tensile strength.

It will immediately be noticed, that the band-shaped products according to the invention are clearly distinguished from the products described in the two references referred to in the preamble. In patent application GB 2 169 930 A, very clearly an elastic non-woven is described, while US Patent 5,219,633 describes disposable, non-woven products, a.o. diapers, the requirements and specifications of which are not connected with the band-shaped non-wovens according to this application.

The fleece on which the non-woven material according to the invention is based, may be composed of synthetic, natural or mineral staple fibres, or a combination of these fibres.

It may also be composed of several non-wovens, also based on the same synthetic, natural or mineral fibres, or mixtures thereof. The fleece may also be built up of continuous synthetic filaments, either in combination with another non-woven or not.

The wires or filaments used for strengthening the fleece, may be described as follows:
a) wire composed of synthetic fibres or of a mixture or combination of these synthetic fibres with natural and/or mineral fibres. The wires may also be twined with synthetic and/or mineral filaments.
b) when using filaments, one may call upon synthetic filaments, or filaments which are twined with wires and/or mineral filaments. The wires which are used for twining, in turn, may consist of synthetic fibres, natural fibres, mineral fibres, or a mixture thereof. Preferably, PES filaments having a thickness of 1100 dtex, a tensile strength of ± 7 kg per filament, an elasticity between 15 and 25 %, a torsion of ± 60 and a weight of 0.11 g/current metre, are used. When a non-woven based on staple fibres is considered, the fleece is built up of synthetic, natural or mineral staple fibres, or a combination of these fibres. The whole is converted into a fleece by using a card, or the technique known as "air-lay".

When the use of filaments (spunbounds) is considered, it is built up of continuous filaments, which in tum are needled, or when thermally bound fleeces are concerned, are compressed by means of a calender, and this at a temperature which is sufficiently high to be able to melt filaments with a lower melting point.

When in a non-woven based on staple fibres, the highest tensile strength is to be realized in the cross direction, the basic fleeces coming from a card, or by application of the technique known as "air-lay", are brought together by means of a cross laying device, until the desired weight is obtained, whereby the speed of the cross laying device is adjusted such, that the rectilinearity of the staple fibres is preserved as much as possible. Only afterwards, the fleece is pre-needled on a pre-needling machine.

Preferably, PES fibres will be used, with a thickness varying between 3 and 6 deniers, or with a mixture thereof. Fibres with a length of 125 and 150 mm are preferred.

When in a non-woven based on staple fibres, the highest tensile strength of the non-woven is to be created longitudinally, the card fleece, of which the staple fibres are parallel to a high degree, is simply rolled up after a light pre-needling or calendering.

When staple fleeces are to be produced in which the difference in tensile strength longitudinally and in the cross direction is to be reduced to a minimum, the process described above with reference to obtaining a non-woven with the highest tensile strength in the cross direction, is applied, but prior to the final needling, the non-woven is stretched by means of a draw bench, so that the fibres will take up a less parallel position. By doing so, the difference in tensile strength longitudinally and in the cross direction is smaller.

If continuous filaments are used, the division of the tensile strength longitudinally and in the cross direction is determined by the degree of rectilinearity or non-rectilinearity of the filament. The longitudinal tensile strength is increased in case of a clear excess of parallel filaments found together. The tensile strength is increased in the cross direction when less rectilinear filaments are found.

In order to guarantee the specifications of the final product, the strengthening wires and/or filaments are laid tensionless onto the fleece, whereby
a) wires and/or filaments wound onto bobbins, or
b) bobbins and/or filaments which are wound, or a combination of both may be used.

The attachment of wires and/or filaments may also be realized on an already thermostabilised fleece. The fleece is stabilised by a calender or hot air drum.

It is important that the process enables the elasticity, in the direction in which the wires and/or filaments are found, to be varied within certain limits, and this by adapting the ratio of feed rate and speed of thermostabilising element.

The finishing comprises:
a) the thermostabilisation
b) the binding of the fibres and/or filaments.

If the basic non-woven is not yet thermally stabilised (by calender or hot air drum), the whole of non-wovens, with its wires or filaments, or a combination of both, is thermally stabilised. This may be done with a calender (of the Stork type), or a drum to which hot air is blown (e.g. of the Fleissner type).

If in the mixture or composition of the filaments fusible fibres or bicomponent fibres or fusible filaments or bicomponent filaments have been used, the product is herewith finally finished.

If no fusible or bicomponent fibres, or fusible or bicomponent filaments have been used, for the binding of the fibres or filaments together, resins are used, preferably acrylic resins, because of their good temperature resistance.

These acrylic resins are applied to the non-woven and squeezed out by means of a sizing machine to the required amount.

The whole of non-woven and acrylic resin is then dried up to a temperature of 210 °C, or until the resin is dried.

By applying the above described process, a final product is obtained with application possibilities both as bituminous roofing bands and as a geotextile.

## Claims

1. Process for manufacturing a band-shaped non-woven product reinforced by strengthening wires or filaments and showing an increased tensile strength longitudinally or in the cross direction of the band-shaped product, **characterized in that**, in the direction in which the tensile strength of the non-woven product is to be increased, strengthening wires and/or filaments are applied to it, and joined to the fleece of which the non-woven consists, by application of the needling technique.

2. Process according to claim 1, **characterized in that**, when applying the strengthening wires longitudinally and in the cross direction of the band-shaped product, these strengthening wires are needled together.

3. Band-shaped non-woven product reinforced by strengthening wires or filaments and showing at least in one direction increased tensile strength, **characterized in that** it consists of at least one fleece on which strengthening wires and/or filaments are applied by the needling technique in the direction in which the tensile strength is to be increased.

4. Non-woven according to claim 3, **characterized in that** above mentioned fleece consists of natural, mineral, or synthetic staple fibres, or a combination thereof.

5. Non-woven according to any one of claims 3 and 4, **characterized in that** above mentioned fleece consists of continuous synthetic filaments.

6. Non-woven according to any one of claims 3-5, **characterized in that** above mentioned strengthening wires and/or filaments are synthetic filaments.

7. Non-woven according to claim 5, **characterized in that** above mentioned synthetic strengthening filaments are twined with wires and/or mineral filaments, whereby the wires used for twining belong to one or several of the following groups: synthetic, natural, mineral fibres, or mixtures thereof, as well as wires twined with filaments.

8. Non-woven according to any one of claims 6 and 7, **characterized in that** above mentioned strengthening filaments and/or wires are PES filaments or wires, having a thickness of 1100 dtex, a tensile strength of ± 7 kg per filament, an elasticity between 15 and 25 %, a torsion of ± 60 and a weight of almost 0.11 g per current metre.

## Patentansprüche

1. Verfahren zur Herstellung eines bandförmigen Vliesstoffproduktes, welches mittels Verstärkungsdrähten oder -filamenten verstärkt ist und in Längsrichtung oder in Querrichtung des bandförmigen Produktes eine erhöhte Zugfestigkeit aufweist, **dadurch gekennzeichnet, daß** in der Richtung, in der die Zugfestigkeit des Vliesstoffproduktes erhöht werden soll, Verstärkungsdrähte und/oder -filamente darauf angewendet werden und mit dem Vlies, aus dem der Vliesstoff besteht, durch Anwenden der Vernadelungstechnik verbunden werden.

2. Verfahren nach Anspruch 1, **dadurch gekennzeichnet, daß** beim Anwenden der Verstärkungsdrähte in Längsrichtung und in Querrichtung des bandförmigen Produktes diese Verstärkungsdrähte miteinander vernadelt werden.

3. Bandförmiges Vliesstoffprodukt, welches mittels Verstärkungsdrähten oder -filamenten verstärkt ist und in mindestens eine Richtung eine erhöhte Zugfestigkeit aufweist, **dadurch gekennzeichnet, daß** es aus mindestens einem Vlies besteht, auf das mittels der Vernadelungstechnik Verstärkungsdrähte und/oder -filamente in der Richtung angewendet sind, in der die Zugfestigkeit erhöht werden soll.

4. Vliesstoff nach Anspruch 3, **dadurch gekennzeichnet, daß** das oben erwähnte Vlies aus natürlichen, mineralischen oder synthetischen Stapelfasern oder einer Kombination davon besteht.

5. Vliesstoff nach einem der Ansprüche 3 und 4, **dadurch gekennzeichnet, daß** das oben erwähnte Vlies aus kontinuierlichen synthetischen Filamenten besteht.

6. Vliesstoff nach einem der Ansprüche 3-5, **dadurch gekennzeichnet, daß** die oben erwähnten Verstärkungsdrähte und/oder -filamente synthetische Filamente sind.

7. Vliesstoff nach Anspruch 5, **dadurch gekennzeichnet, daß** die oben erwähnten synthetischen Verstärkungsfilamente mit Drähten und/oder mineralischen Filamenten verzwirnt sind, wobei die zum Verzwirnen verwendeten Drähte zu einem oder mehreren der folgenden Gruppe gehören: synthetische, natürliche, mineralische Fasern oder deren Mischungen, ebenso wie mit Filamenten verzwirnte Drähte.

8. Vliesstoff nach einem der Ansprüche 6 und 7, **dadurch gekennzeichnet, daß** die oben erwähnten Verstärkungsfilamente und/oder -drähte PES-Filamente oder Drähte mit einer Dicke von 1100 dtex, einer Zugfestigkeit von ±7 kg pro Filament, einer Elastizität zwischen 15 und 25%, einer Torsion von ±60 und einem Gewicht von beinahe 0,11 g pro laufendem Meter sind.

## Revendications

1. Procédé de fabrication d'un produit non tissé en bande renforcé par des fils ou des filaments de renforcement et présentant une résistance à la traction accrue longitudinalement ou dans la direction transversale du produit en bande, **caractérisé en ce que** dans la direction dans laquelle la résistance à la traction du produit non tissé doit être accrue, des fils et / ou filaments de renforcement lui sont appliqués et joints à la nappe en laquelle le non tissé consiste par application de la technique d'aiguilletage.

2. Procédé selon la revendication 1, **caractérisé en ce que**, lors de l'application des fils de renforcement longitudinalement et dans la direction transversale du produit en bande, ces fils de renforcement sont aiguilletés ensemble.

3. Produit non tissé en bande renforcé par des fils ou des filaments de renforcement et présentant au moins dans une direction une résistance à la traction accrue, **caractérisé en ce qu'**il consiste en au moins une nappe sur laquelle les fils et / ou filaments de renforcement sont appliqués par la technique d'aiguilletage dans la direction dans laquelle la résistance à la traction doit être accrue.

4. Non tissé selon la revendication 3, **caractérisé en ce que** la nappe susmentionnée consiste en fibres naturelles, minérales ou synthétiques à filer ou en une combinaison de celles-ci.

5. Non tissé selon une quelconque des revendications 3 et 4, **caractérisé en ce que** la nappe susmentionnée consiste en filaments synthétiques continus.

6. Non tissé selon une quelconque des revendications 3 - 5, **caractérisé en ce** les fils et / ou filaments de renforcement susmentionnés sont des filaments synthétiques.

7. Non tissé selon la revendication 5, **caractérisé en ce que** les filaments de renforcement synthétiques susmentionnés sont tordus avec des fils et / ou des filaments minéraux, les fils utilisés pour le tordage appartenant à un ou plusieurs des groupes suivants: fibres synthétiques, naturelles, minérales, ou des mélanges de celles-ci ainsi que des fils tordus avec des filaments.

8. Non tissé selon une quelconque des revendications 6 et 7, **caractérisé en ce que** les filaments et / ou fils de renforcement susmentionnés sont des filaments ou des fils en polyester ayant une épaisseur de 1100 dtex, une résistance à la traction de ± 7 kg par filament, une élasticité entre 15 et 25 %, une torsion de ± 60 et un poids de presque 0,11 g par mètre courant.
